# EUROPEAN PATENT SPECIFICATION

(11) **EP 2 240 337 B1**
(45) Date of publication and mention of the grant of the patent: **20.07.2011**
(21) Application number: 09702416.0
(22) Date of filing: 12.01.2009
(51) Int. Cl.: B60H 1/00

(54) **AIR DUCT FOR AN AIR CONDITIONING SYSTEM**
LUFTKANAL FÜR EIN KLIMAANLAGENSYSTEM
CONDUITE D'AIR POUR SYSTÈME DE CLIMATISATION

(30) Priority: 14.01.2008 GB 0800542
(43) Date of publication of application: 20.10.2010
(73) Proprietor: Land Rover, Gaydon Warwickshire CV35 0RR (GB)
(72) Inventor: BAMBROOK, Graham Stephen John, Wokingham RG40 2HT (GB)
(74) Representative: Holmes, Matthew William
(86) International application number: PCT/IB2009/050113
(87) International publication number: WO 2009/090595

(56) References cited:
- EP-A- 1 930 211
- EP-A- 1 935 682
- EP-A- 1 997 656
- DE-A1- 19 733 319
- DE-B- 1 263 531

## Description

### BACKGROUND OF THE INVENTION

### 1. Field of the Invention

The present invention relates to an air duct for a heating, ventilating and air conditioning (HVAC) system of a motor vehicle and to an instrument panel equipped with such air ducts.

### 2. Background Art

It is known to provide an instrument panel with air ducts to distribute air from a conditioning system. Air ducts commonly have a hollow body which includes an inlet opening to mate with either another duct or to an opening of a conditioning system and an outlet opening to mate with an aperture formed on the instrument panel. The size and shape of the outlet opening is usually dictated by the design parameters of the conditioning system but also by the physical appearance of the aperture that designers wish to create on the instrumental panel. In order to make this aperture less visible as possible it has been suggested to create an outlet which has a substantially rectangular shape with the length that has a corresponding distance that exceeds the height, forming thus a long and narrow outlet.

It is a problem with such outlet shapes that the supply of air to the air duct tends to be concentrated on one side of the outlet opening. This can be uncomfortable to the occupant and may create noise or vibration through the air duct. It is an object of the invention to provide an air duct having an improved air distribution system that overcomes the disadvantage aforementioned.

DE-A-1263531, which is considered as the closest prior art, discloses an air duct of a vehicle having the features of the pre-characterizing portion of claim 1.

EP-A-1935682 discloses an air duct having a row of internal webs to direct air flow to an outlet.

### SUMMARY OF THE INVENTION

According to a first aspect of the invention there is provided an air duct for a vehicle air conditioning system, comprising a hollow body having substantially a rectangular shaped box with its length that has a corresponding distance that exceeds its height, the body including a top wall, a bottom wall, a rear wall, a front wall, side walls, an inlet opening arranged on one of the side walls, and an outlet opening arranged on the front wall, wherein the outlet opening has a substantially rectangular shape with its length that has a corresponding distance that exceeds its height and a cross section relatively larger than the inlet opening, and in that the air duct includes an air distribution device located within the body to maintain an even distribution of air across the outlet, wherein said air distribution device includes a row of first stage vanes and a row of second stage vanes which are disposed along the length of the body characterised in that said first stage vanes are directly exposed to air exiting the air conditioning system, the second stage vanes being aft of the first stage vanes, and the second stage vanes being arranged in a row adjacent the outlet so that flow is stabilized in the first stage vanes and directed toward the second stage vanes.

Preferably, the rear wall has a concave shape so as to impart an initial flow direction to the air. Preferably, the first stage vanes includes a first row of vanes which extend from the bottom wall and the top wall, the vanes are spaced apart from each other and have an airfoil shape in cross longitudinal section, each airfoil vane comprising a leading edge, a trailing edge, a centre and a chord which is parallel to a longitudinal axis of the inlet aperture.

Each airfoil vane of the first stage may comprise pressure and suction side surfaces and may be arranged within the body in such a way that the suction side surface of each airfoil vane may be directed toward the outlet opening. The centre of each airfoil vane may be located on a fictive line which forms an acute angle of between 20 to 30 degrees with the longitudinal axis of the inlet opening. Preferably each airfoil vane has a thickness of about 1.5 to 3 mm.

The second stage vanes may include a second row of vanes which are spaced apart from each other, extend from the bottom wall and the top wall and have an airfoil shape in cross longitudinal section, each airfoil vane comprising a leading edge, a trailing edge, and pressure and suction side surfaces. The airfoil vanes of the second stage may be disposed within the body in such a way that the leading edge of each airfoil vane may be directed toward the outlet opening and the suction side surface of each airfoil vane may be directed toward the inlet opening. Preferably the airfoil vanes of the second row are thicker than the airfoil vanes of the first row.

According to a second aspect of the invention there is provided an instrument panel of a vehicle passenger compartment having a fascia to support instruments associated with the motor vehicle, an air conveying system mounted behind the fascia, the air conveying system comprising at least one air duct which is in accordance with said first aspect of the invention and arranged to mate with an aperture formed on the instrument panel.

### BRIEF DESCRIPTION OF THE DRAWINGS

The invention will now be described by way of example with reference to the accompanying drawings of which:
FIGURE 1 is a cross-section view of an instrument panel of a vehicle passenger compartment equipped with an air duct according to the present invention,
FIGURE 2 is a perspective view of the air duct shown in FIGURE 1 with the top wall omitted, and

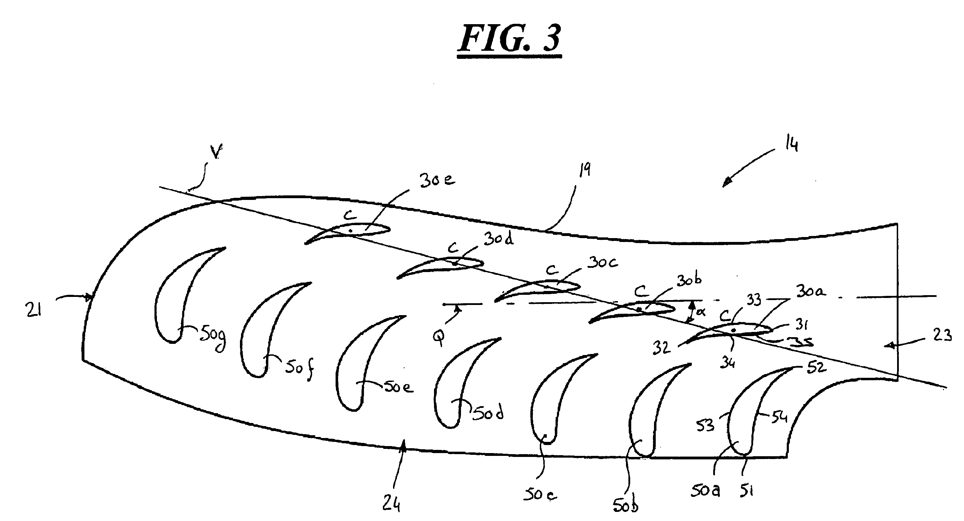

FIGURE 3 is a top view of the air duct shown in FIGURE 2.

### DETAILED DESCRIPTION OF THE PREFERRED EMBODIMENT(S)

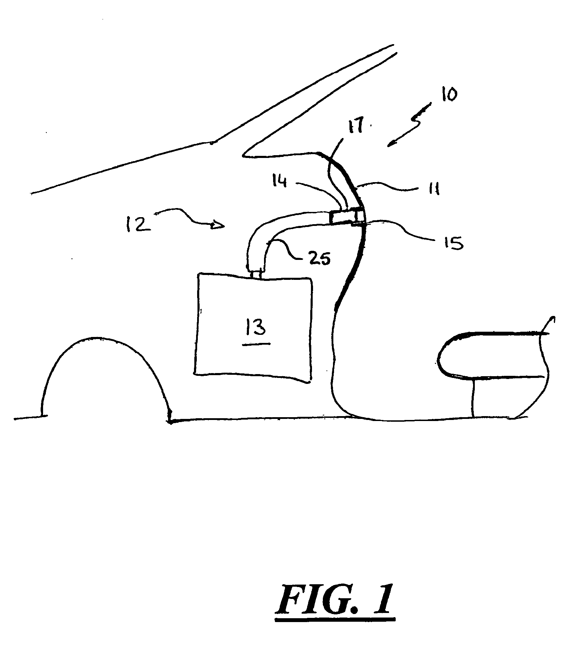

Referring now to Figure 1, there is shown an instrument panel 10 of a vehicle passenger compartment which includes a fascia 11 to support the instruments associated with the motor vehicle. A vehicle air conveying system 12 is mounted behind the fascia 11. The vehicle air conveying system 12 comprises a heating, ventilation and air conditioning (HVAC) system 13 that comprises conventional components (i.e. a heater core, a blower for blowing air through the heater core, an evaporator for cooling air, ..) and at least one air duct 14 arranged to mate with an aperture 15 formed on the fascia 11. For example, the air conveying system comprises a right air duct, a left air duct and at least one centre air duct disposed between the left and right air ducts.

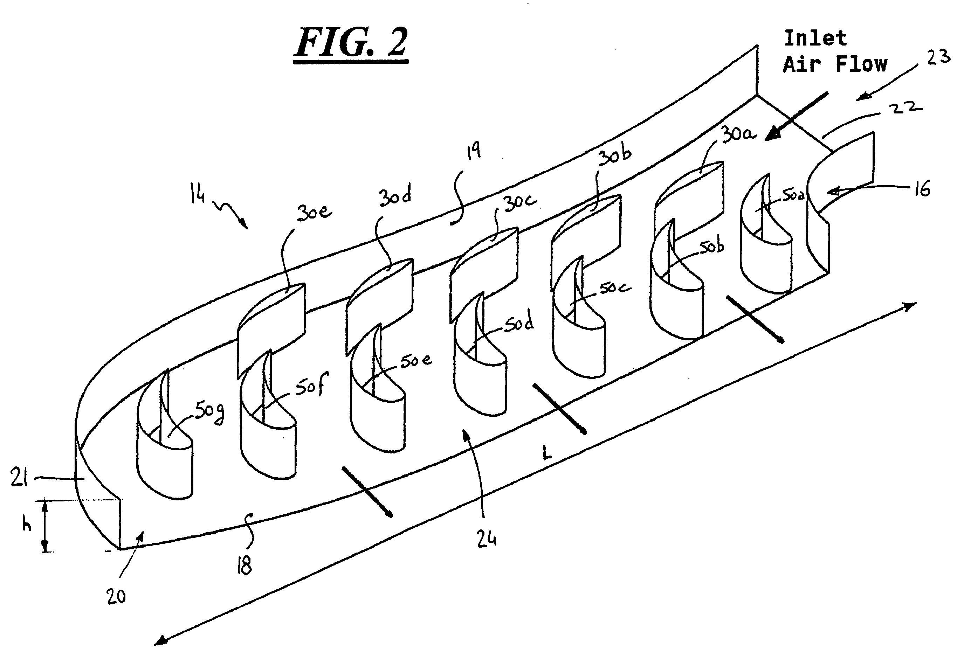

With reference to Figs 1 and 2, the air duct 14 according to the invention has a hollow body 16 forming substantially a rectangular-shaped box with its length L that has a corresponding distance that exceeds its height h and which comprises a top wall 17, a bottom wall 18, a rear wall 19, a front wall 20, side walls 21 and 22, an inlet opening 23 arranged on one of the side walls and an outlet opening 24 arranged on the front wall 20.

In a conventional manner, the inlet opening 23 is arranged to mate with an opening of the conditioning system or another duct 25 and the outlet opening 24 to mate with the aperture 15. The shape and size of the aperture 15 matches the shape and size of the outlet opening 24, i.e. has a substantially rectangular shape with its length that has a corresponding distance that exceeds its height. Such a shape of an aperture 15 and outlet 24 enables the air duct 14 to be hidden behind a decorative trim finisher (not shown). In a conventional manner, an air vent provided with a movable louver structure (not shown) is mounted in register with the aperture on the trim finisher so as to adjust the outlet direction of air, for example up/down or/and left/right.

In order to have a uniform distribution of air along the length of the outlet opening 24, in which the outlet cross section is relatively higher than the inlet cross section, the air duct is provided with an air distribution device. The air distribution device includes a first and second stage vanes 30 and 50 arranged within the hollow body 16 of the air duct 14. The first stage vane includes a first row of vanes 30a to 30e, in this example five (5) vanes, disposed along the length of the body 16 and directly exposed to air exiting from the air conditioning system 13. Each vane 30a to 30e of the first row extends from the inner surface of the bottom wall 18 and the inner surface of the top wall 11 and has an airfoil shape in cross longitudinal section.

Each airfoil vane 30a to 30e comprises a leading edge 31, a trailing edge 32, and pressure and suction side surfaces 33 and 34. Each airfoil vane 30 also has a chord 35, which is a line from the leading edge 31 to the trailing edge 32. Each chord 35 of airfoil vanes 30 is parallel to a longitudinal axis Q of the inlet opening 23 and arranged in such a way that the suction side surface 34 of each airfoil vane 30 is directed toward the outlet opening 24. The airfoil vanes 30a to 30e are also spaced apart from each other and have a moderate thickness which is about 1.5 to 3 mm. In addition the substantially centre C of each airfoil vane 30 is located on a fictive line V which form an acute angle α of between 15 to 30 degrees with the longitudinal axis Q of the inlet opening 23 so as to maintain the velocity of the air coming from the inlet opening 23 all along the length of the air duct 14. Preferably, the rear wall 19 of the air duct 14 has a concave shape, i.e. the rear wall 19 is curved into the body so as to impart an initial flow direction to the air.

The second stage vanes includes a second row of vanes 50, in this example seven (7) vanes 50a to 50g, disposed along the length of the body 16 and aft of the first stage vanes 30. Each vane 50 of the second row has an airfoil shape in cross longitudinal section which extends between the bottom wall 18 and the top wall 17. Each airfoil vane 50a to 50g comprises a leading edge 51, a trailing edge 52, and pressure and suction side surfaces 53 and 54. The airfoil vanes 50 of the second row are thicker than the airfoil vanes of the first row, for example the thickness of the second stage 50 is about 5 to 7 mm. The airfoil vanes 50 are disposed on a row adj acent to the outlet 24 of the air duct 14 and arranged in such a way that the leading edge 51 is directed toward the outlet opening 24 and the suction side surface 54 of each airfoil vane 50 is directed toward the inlet opening 23 so as to delay flow separation and maintain a favourable pressure gradient between each vane of this second stage.

In use the air exiting from the air conditioning system 13 which is intended for the front passengers passes into the duct 14 flows out of the outlet 24 through the long and narrow aperture in the fascia. A substantially uniform distribution of air at the aperture 15 is produced despite this long and narrow aperture which improves the comfort for an occupant of the vehicle because the duct 14 is provided with the air distribution device according to the present invention which enable the flow to be stabilised in the first stage vanes 30 and to be directed toward the second stage vanes 50 which delay flow separation and maintain a favourable pressure gradient between the vanes 50 of this second stage.

The air duct 14 is made of plastic material and can be a single component or two separate components, for example a bottom component and a cover component so that the process of manufacture could utilise injection moulding with gas injection or could be blow moulding. Although the invention has been described by way of example with reference to a specific embodiment of the invention various modifications or additions may be made without departing from the invention. For example, the number of vanes 30 and 50 on the first and second stage may vary in function of the length of the outlet opening.

While embodiments of the invention have been illustrated and described, it is not intended that these embodiments illustrate and describe all possible forms of the invention. Rather, the words used in the specification are words of description rather than limitation, and it is understood that various changes may be made without departing from the scope of the invention as defined in the attached claims.

## Claims

1. An air duct (14) for a vehicle air conditioning system, comprising a hollow body (16) having substantially a rectangular shaped box with its length that has a corresponding distance that exceeds its height, the body (16) including a top wall (17), a bottom wall (18), a rear wall (19), a front wall (20), side walls (21,22), an inlet opening (23) arranged on one of the side walls, and an outlet opening (24) arranged on the front wall, wherein the outlet opening (24) has a substantially rectangular shape with its length that has a corresponding distance that exceeds its height and a cross section relatively larger than the inlet opening (23), and in that the air duct (14) includes an air distribution device located within the body to maintain an even distribution of air across the outlet, wherein said air distribution device includes a row of first stage vanes (30) and a row of second stage vanes (50) which are disposed along the length of the body **characterised in that** said first stage vanes (30) are directly exposed to air exiting the air conditioning system, the second stage vanes (50) being aft of the first stage vanes (30), and the second stage vanes (50) being arranged in a row adjacent the outlet (24) so that flow is stabilized in the first stage vanes (30) and directed toward the second stage vanes (50).

2. The air duct as claimed in claim 1 in which the rear wall (19) has a concave shape.

3. The air duct as claimed in claim 1 in which the first stage vanes (30) includes a first row of vanes (30a-30e) which extend from the bottom wall (18) and the top wall (17), the vanes are spaced apart from each other and have an airfoil shape in cross longitudinal section, each airfoil vane (30a-30e) comprising a leading edge (31), a trailing edge (32), a centre and a chord (35) which is parallel to a longitudinal axis of the inlet aperture.

4. The air duct as claimed in claim 3, in which each first stage airfoil vane (30a-30e) of the first stage comprises pressure and suction side surfaces and are arranged within the body in such a way that the suction side surface (34) of each airfoil vane is directed toward the outlet opening (24).

5. The air duct as claimed in claim 3 in which the centre of each first stage airfoil vane is located on a fictive line (V) which form an acute angle of between 20 to 30 degrees with the longitudinal axis of the inlet opening (24).

6. The air duct as claimed in claim 3 in which each first stage airfoil vane (30a-30e) has a thickness of about 1.5 to 3 mm.

7. The air duct as claimed in claim 1 in which the second stage vanes (50) includes a second row of vanes (50a-50g) which are spaced apart from each other, extend from the bottom wall (18) and the top wall (17) and have an airfoil shape in cross longitudinal section, each airfoil vane comprising a leading edge (51), a trailing edge (52), and pressure and suction side surfaces (53,54).

8. The air duct as claimed in claim 7 in which the airfoil vanes of the second stage are disposed within the body (16) in such a way that the leading edge (51) of each airfoil vane is directed toward the outlet opening (24) and the suction side surface (54) of each airfoil vane is directed toward the inlet opening (23).

9. The air duct as claimed in claim 1 in which the airfoil vanes of (50a-50g) of the second row are thicker than the airfoil vanes (30a-30e) of the first row.

10. An instrument panel (10) of a vehicle passenger compartment having a fascia (11) to support instruments associated with the motor vehicle, an air conveying system (12) mounted behind the fascia, the air conveying system comprising at least one air duct (14) as claimed in claim 1 and arranged to mate with an aperture (15) formed on the fascia (11).

## Patentansprüche

1. Luftkanal (14) für eine Fahrzeugklimaanlage, die Folgendes umfaßt: einen Hohlkörper (16) mit im Wesentlichen einem rechteckigen Kasten, dessen Länge einen entsprechenden Abstand aufweist, der seine Höhe übersteigt, wobei der Körper (16) eine Deckwand (17), eine Bodenwand (18), eine Rückwand (19), eine Frontwand (20), Seitenwände (21, 22), eine an einer der Seitenwände angeordnete Einlassöffnung (23) und eine an der Frontwand angeordnete Auslassöffnung (24) aufweist, wobei die Auslassöffnung (24) eine im Wesentlichen rechteckige Gestalt aufweist, deren Länge einen entsprechenden Abstand aufweist, der ihre Höhe übersteigt, und einen Querschnitt relativ größer als die Einlassöffnung (23), und dass der Luftkanal (14) eine in dem Körper angeordnete Luftverteilungseinrichtung enthält, um eine gleichmäßige Verteilung von Luft über den Auslass aufrechtzuerhalten, wobei die Luftverteilungseinrichtung eine Reihe Lamellen (30) einer ersten Stufe und eine Reihe von Lamellen (50) einer zweiten Stufe enthält, die entlang der Länge des Körpers angeordnet sind, **dadurch gekennzeichnet, dass** die Lamellen (30) der ersten Stufe aus der Klimaanlage austretender Luft direkt ausgesetzt sind, wobei sich die Lamellen (50) der zweiten Stufe hinter den Lamellen (30) der ersten Stufe befinden und die Lamellen (50) der zweiten Stufe in einer Reihe beim Auslass (24) angeordnet sind, so dass eine Strömung in den Lamellen (30) der ersten Stufe stabilisiert wird und zu den Lamellen (50) der zweiten Stufe gerichtet werden.

2. Luftkanal nach Anspruch 1, bei dem die Rückwand (19) eine konkave Gestalt aufweist.

3. Luftkanal nach Anspruch 1, bei dem die Lamellen (30) der ersten Stufe eine erste Reihe von Lamellen (30a-30e) beinhalten, die sich von der Bodenwand (18) und der Deckwand (17) aus erstrecken, wobei die Lamellen von einander beabstandet sind und im Querlängsschnitt eine Flügelgestalt aufweisen, wobei jede Flügellamelle (30a-30e) eine Vorderkante (31), eine Hinterkante (32), eine Mitte und eine Sehne (35) umfaßt, die parallel zu einer Längsachse der Einlassmündung verläuft.

4. Luftkanal nach Anspruch 3, bei dem die Flügellamellen (30a-30e) der ersten Stufe Druck- und Saugseitenoberflächen umfassen und derart innerhalb des Körpers angeordnet sind, dass die Saugseitenoberfläche (34) jeder Flügellamelle zu der Auslassöffnung (24) weist.

5. Luftkanal nach Anspruch 3, bei dem die Mitte jeder Flügellamelle der ersten Stufe auf einer gedachten Linie (V) liegt, die mit der Längsachse der Einlassöffnung (24) einen spitzen Winkel von zwischen 20 und 30 Grad bildet.

6. Luftkanal nach Anspruch 3, bei dem jede Flügellamelle (30a-30e) der ersten Stufe eine Dicke von etwa 1,5 bis 3 mm aufweist.

7. Luftkanal nach Anspruch 1, bei dem die Lamellen (50) der zweiten Stufe eine zweite Reihe von Lamellen (50a-50g) enthalten, die voneinander beabstandet sind, sich von der Bodenwand (18) und der Deckwand (17) aus erstrecken und im Querlängsschnitt eine Flügelgestalt aufweisen, wobei jede Flügellamelle eine Vorderkante (51), eine Hinterkante (52) und Druck- und Saugseitenoberflächen (53, 54) aufweist.

8. Luftkanal nach Anspruch 7, bei dem die Flügellamellen der zweiten Stufe derart innerhalb des Körpers (16) angeordnet sind, dass die Vorderkante (51) jeder Flügellamelle zu der Auslassöffnung (24) weist und die Saugseitenoberfläche (54) jeder Flügellamelle zu der Einlassöffnung (23) weist.

9. Luftkanal nach Anspruch 1, bei dem die Flügellamellen (50a-50g) der zweiten Reihe dicker sind als die Flügellamellen (30a-30e) der ersten Reihe.

10. Instrumentenbrett (10) eines Fahrzeuginnenraums mit einer Verkleidung (11) zum Tragen von mit dem Kraftfahrzeug assoziierten Instrumenten, wobei ein Luftfördersystem (12) hinter der Verkleidung angeordnet ist, wobei das Luftfördersystem mindestens einen Luftkanal (14) nach Anspruch 1 umfaßt, der ausgelegt ist zum Koppeln mit einer an der Verkleidung (11) ausgebildeten Mündung (15).

## Revendications

1. Conduit d'air (14) pour système de climatisation de véhicule, comprenant un corps creux (16) ayant sensiblement une boîte de forme rectangulaire dont la longueur a une distance correspondante qui dépasse sa hauteur, le corps (16) comportant une paroi supérieure (17) une paroi inférieure (18), une paroi arrière (19), une paroi frontale (20), des parois latérales (21, 22), une ouverture d'admission (23) aménagée sur l'une des parois latérales, et une ouverture de sortie (24) aménagée sur la paroi frontale, l'ouverture de sortie (24) ayant une forme sensiblement rectangulaire dont la longueur a une distance correspondante qui dépasse sa hauteur et une coupe transversale relativement plus grande que l'ouverture d'admission (23), et en ce que le conduit d'air (14) comporte un dispositif de distribution d'air situé à l'intérieur du corps pour maintenir une distribution uniforme de l'air en travers de la sortie, dans lequel ledit dispositif de distribution d'air comporte une rangée d'aubes de premier étage (30) et une rangée d'aubes de deuxième étage (50) qui sont disposées le long du corps **caractérisé en ce que** lesdites aubes de premier étage (30) sont directement exposées à l'air sortant du système de climatisation, les aubes de second étage (50) étant à l'arrière des aubes de premier étage (30), et les aubes de second étage (50) étant agencées en une rangée adjacente à la sortie (24) de telle sorte que le flux soit stabilisé dans les aubes de premier étage (30) et dirigé vers les aubes de second étage (50).

2. Conduit d'air selon la revendication 1, dans lequel la paroi arrière (19) a une forme concave.

3. Conduit d'air selon la revendication 1, dans lequel les aubes de premier étage (30) comportent une première rangée d'aubes (30a-30e) qui s'étendent depuis la paroi inférieure (18) et la paroi supérieure (17), les aubes sont espacées les unes des autres et ont un profil aérodynamique en coupe longitudinale, chaque aube aérodynamique (30a -30e) comprenant un bord d'attaque (31), un bord de fuite (32), un centre et une corde (35) qui est parallèle à un axe longitudinal de l'ouverture d'admission.

4. Conduit d'air selon la revendication 3, dans lequel les aubes aérodynamiques de premier étage (30a-30e) du premier étage comprennent chacune des surfaces d'intrados et d'extrados et sont disposées dans le corps de telle sorte que la surface d'extrados (34) de chaque aube aérodynamique soit dirigée vers l'ouverture de sortie (24).

5. Conduit d'air selon la revendication 3, dans lequel le centre de chaque aube aérodynamique de premier étage est situé sur une ligne fictive (V) qui forme un angle aigu d'entre 20 à 30 degrés avec l'axe longitudinal de l'ouverture d'admission (24).

6. Conduit d'air selon la revendication 3, dans lequel chaque aube aérodynamique de premier étage (30a-30e) a une épaisseur d'environ 1,5 à 3 mm.

7. Conduit d'air selon la revendication 1, dans lequel les aubes de second étage (50) comportent une seconde rangée d'aubes (50a- 50g) qui sont espacées les unes des autres, s'étendent depuis la paroi inférieure (18) et la paroi supérieure (17) et ont une forme aérodynamique en coupe longitudinale, chaque aube aérodynamique comprenant un bord d'attaque (51), un bord de fuite (52), et des surfaces d'intrados et d'extrados (53, 54).

8. Conduit d'air selon la revendication 7, dans lequel les aubes aérodynamiques du second étage sont disposées dans le corps (16) de telle sorte que le bord d'attaque (51) de chaque aube aérodynamique soit dirigé vers l'ouverture de sortie (24) et la surface d'extrados (54) de chaque aube aérodynamique soit dirigée vers l'ouverture d'admission (23).

9. Conduit d'air selon la revendication 1, dans lequel les aubes aérodynamiques (50a-50g) de la seconde rangée sont plus épaisses que les aubes aérodynamiques (30a-30e) de la première rangée.

10. Tableau de bord (10) d'un habitacle de véhicule ayant une planche de bord (11) pour supporter des instruments associés au véhicule, un système d'acheminement d'air (12) monté derrière la planche de bord, le système d'acheminement d'air comprenant au moins un conduit d'air (14) selon la revendication 1 et agencé pour s'accoupler à une ouverture (15) formée sur la planche de bord (11).
